# EUROPÄISCHE PATENTSCHRIFT

(11) **EP 0 501 994 B1**
(45) Veröffentlichungstag und Bekanntmachung des Hinweises auf die Patenterteilung: **09.08.1995**
(21) Anmeldenummer: 90916693.6
(22) Anmeldetag: 24.11.1990
(51) Int. Cl.: E06B 3/96, F16B 7/04

(54) **VERBINDUNGSFORMSTÜCK FÜR BAUPROFILE**
MOULDED CONNECTION ELEMENT FOR HOLLOW-SECTION STRUCTURAL COMPONENTS
PIECE MOULEE POUR LE RACCORDEMENT DE PROFILES DE CONSTRUCTION

(30) Priorität: 24.11.1989 DE 3938996; 16.01.1990 DE 4000983; 21.04.1990 DE 4012808
(43) Veröffentlichungstag der Anmeldung: 09.09.1992
(73) Patentinhaber: Salamander Industrie-Produkte GmbH, D-86842 Türkheim (DE)
(72) Erfinder: PAULSEN, Hans-Dieter, D-6144 Zwingenberg (DE)
(74) Vertreter: Körner, Ekkehard, Dipl.-Ing.
(86) Internationale Anmeldenummer: DE9000901
(87) Internationale Veröffentlichungsnummer: WO9108367

(56) Entgegenhaltungen:
- CH-A- 328 345
- DE-A- 1 809 159
- DE-A- 2 307 595
- LU-A- 36 344
- US-A- 2 101 349
- US-A- 3 163 264
- US-A- 3 726 551
- US-A- 4 105 348

## Beschreibung

Die Erfindung bezieht sich auf ein federelastisches Element für ein Verbindungsformstück für Bauprofile, insbesondere für Tür- oder Fensterprofile, nach dem Oberbegriff des Anspruchs 1 bzw. 2.

Beispielsweise im Zusammenhang mit der Fertigung von Tür- und Fensterrahmen aus stranggepreßten Aluminiumprofilen ist es üblich, die Profile auf Gehrung zu schneiden und durch Eckverbinder miteinander zu verbinden. Die Eckverbinder sind entweder geschnittene Strangpreßprofile oder aus Zink-Druckguß gefertigt, welche mit ihren Befestigungsschenkeln in Hohlkammern der auf Gehrung geschnittenen Aluminiumprofile eingeführt, dort verklebt und durch Sicken oder die Verwendung von Schrauben oder Spreizstiften gesichert werden. Für das Sicken sind aufwendige Maschinen erforderlich; das gilt insbesondere für solche Profile, bei welchen quer zur Profilrichtung gesickt werden muß. Die Möglichkeiten des Schraubens oder Verstiftens sind arbeitsaufwendig und lohnintensiv. Soll beim Eintreiben eines Befestigungsschenkels in die Hohlkammer von vornherein aufgrund der vorgegebenen Toleranzen ein dauerhafter Preßsitz des Befestigungsschenkels in der Hohlkammer erreicht werden, wäre ebenfalls ein erheblicher maschineller Aufwand erforderlich.

Ein federelastisches Element mit den eingangs genannten Merkmalen ist in der US-A-4 105 348 offenbart. Dieses federelastische Element ist als L- oder U-profilartiger Clip ausgebildet, der in zwei oder drei rezessartigen, benachbarten Außenwandabschnitten der Befestigungsschenkel eines Verbindungsformstückes einlegbar ist. Auf jeder der zwei bzw. drei benachbarten Außenflächen des federelastischen Elements sind eine Mehrzahl von Widerhaken vorgesehen. Die Abmessungen der Rezesse der benachbarten Außenwandabschnitte und des federelastischen Elements können derart aufeinander abgestimmt sein, daß das federelastische Element in Preßpassung von den Rezessen aufgenommen werden kann. Bereits geringe, in einer Massenfertigung der federelastischen Elemente bzw. der Verbindungsstücke mit vertretbarem Aufwand nicht auszuschließende Streuung dieser Abmessungen führen dazu, daß das federelastische Element in die Rezesse nicht einlegbar bzw. in den Rezessen nicht fixierbar ist.

Aus der DE-A-1 809 159 sind federelastische Elemente für ein Verbindungsstück für Bauprofile bekannt, welche sämtlich einstückig mit dem Verbindungselement verbunden sind. Die Verbindungselemente bestehen aus stranggepreßten Leichtmetallprofilen oder aus Leichtmetallspritzgußteilen. Problematisch bei derartigen relativ steifen Elementen ist zum einen die Einführung des Verbindungsformstücks in das Bauprofil, da die federelastischen Elemente aufgrund der Steifigkeit einen hohen Reibungswiderstand entgegensetzen. Zum anderen besteht die Gefahr, daß die federelastischen Elemente während des Einfügens des Verbindungsformstückes in das Bauprofil brechen und eine zuverlässige Verbindung ohne weitere Maßnahmen wie bspw. kleben oder ähnliches nicht gewährleistet ist.

Gemäß der US-A-3 726 551 ist bei einer Eckverbindung für Hohlprofile eine Federzunge an ihrem freien Ende mit Zacken versehen und durch einen Schlitz in der Wandung des Eckverbinders gesteckt, um den Eingriff mit der Innenfläche der Hohlprofilwandung der Hohlprofile zu verbessern.

Aufgabe der vorliegenden Erfindung ist es, ein federelastisches Element mit den im Oberbegriff der Ansprüche 1 bzw. 2 genannten Merkmalen derart auszubilden, daß das federelastische Element einfach und sicher an dem Befestigungsschenkel festgelegt werden kann und der Befestigungsschenkel danach leicht in die Befestigungskammer des Bauprofiles, d.h. bspw. von Hand, einführbar und dennoch dort zuverlässig festlegbar ist, um eine einwandfreie Verbindung von Bauprofilen zu schaffen.

Diese Aufgabe wird im wesentlichen mit den Merkmalen des Anspruchs 1 gelöst. Der Vorteil dieser Ausgestaltung besteht darin, daß der Clip einen festen Sitz in der Aussparung erhält, ohne daß die Funktion des federelastisches Elementes, welches ebenfalls von einer Querseite des Mittelabschnitts abgewinkelt sein und in die Aussparung einfedern kann, beeinträchtigt wird. Das federelastische Element kann sich beim Einführen des Befestigungsschenkels in die Befestigungskammer des Bauprofils biegen und federnd auf der Innenwandung der Befestigungskammer bis zur endgültigen Position des Befestigungsschenkels in der Befestigungskammer gleiten. Dadurch, daß das federelastische Element im Bereich einer Aussparung in der Seitenfläche des Befestigungsschenkels angeordnet ist, wird der erforderliche Feiraum für das Einfedern des freien Endes des federelastischen Elements beim Einführen des Befestigungsschenkels in die Befestigungskammer geschaffen, so daß der Befestigungsschenkel im übrigen formschlüssig aber ohne größeren Kraftaufwand in die Befestigungskammer einpaßbar und in diese unter Überwindung lediglich geringer Reibungskräfte einführbar ist. Dann ist der Befestigungsschenkel nicht nur axial zuverlässig in der Befestigungskammer festgelegt, sondern ist auch gegen seitliches Verrücken gesichert, da er mit den Außenflächen großflächig an der Innenfläche der Wandung der Befestigungskammer anliegt.

Eine weitere Lösung der gestellten Aufgabe erfolgt im wesentlichen mit den Merkmalen des Anspruchs 2. Hierdurch wird neben den bereits erläuterten Vorteilen eine einfache und sichere Montage auch durch ungelernte Hilfskräfte ermöglicht.

Der Clip ist vorteilhafterweise symmetisch ausgebildet, wobei beide Endabschnitte jeweils ein federelastisches Element bilden, von welchem die je nach dem in welcher Orientierung der Clip in die Aussparung eingesetzt ist, nur der eine als federelastisches Element und der andere als Halteabschnitt wirken. Die Montage des Clips wird hierdurch noch weiter vereinfacht.

Um einen sicheren Sitz des Clips auch beim Einschieben des Befestigungsschenkels in seine Befestigungskammer zu gewährleisten, d.h. um ein zuverlässiges Widerlager beim Einfedern des äußeren Endes des elasischen Elements zu gewährleisten, ist in weiterer vorteilhafter Ausgestaltung der Erfindung vorgesehen, daß sich der Mittelabschnitt wenigstens bereichsweise auf einen Boden der Aussparung abstützen kann.

Für eine symmetrische Ausgestaltung des Clips ist es dabei von Vorteil, wenn sich der Mittelabschnitt in wenigstens zwei getrennten Bereichen auf unterschiedlich hoch liegenden Abschnitten des Bodens der Aussparung abstützen kann.

Gemäß einer anderen Weiterbildung der Erfindung sind die beiden auf dem Boden der Aussparung anliegenden Bereiche des Mittelabschnitts von einem schräg zur Längsrichtung des Befestigungsschenkels anordenbaren Zwischenabschnitt voneinander getrennt. Dieser Zwischenabschnitt begünstigt die eingespannte Haltung des Clips in der Aussparung.

Von Vorteil ist der eine abgewinkelte Endabschnitt des Clips vorzugsweise in dem Schlitz und der eine Bereich des Mittelabschnitts zwischen dem Boden der Aussparung und der Innenfläche der Befestigungskammer formschlüssig festlegbar.

Zur weiteren Verbesserung des Sitzes des Verbindungsformstückes und der Arretierungswirkung übt das federelastische Element seine Federkraft vorzugsweise senkrecht zur Ebene des aus den Bauprofilen gebildeten Rahmens aus, so daß auch die ggf. vorgesehene Aussparung auf der entsprechenden Seite des Befestigungsschenkels vorgesehen ist.

Nach einer noch weiteren Ausgestaltung der Erfindung ist das federelastische Element im Bereich einer Aussparung in der Seitenfläche des Befestigungsschenkels angeordnet und auf einander gegenüberliegenden Seitenflächen des Befestigungsschenkels jeweils eine Aussparung mit einem federelastischen Element vorgesehen. Dadurch wird eine außerordentlich hohe Verbindungssicherheit zwischen den Bauprofilen erreicht.

Die Aussparungen sind vorteilhafterweise in der Nähe der Enden des Befestigungsschenkels geringfügig axial zueinander versetzt angeordnet. Durch diese Maßnahme wird die Verbindungssicherheit zwischen den Bauprofilen noch weiter erhöht, da die federelastischen Elemente an verschiedenen Punkten entlang der axialen Erstreckung des Befestigungsschenkels sich widerhakenartig mit der Innenwand der Befestigungskammer verkrallen.

Wenn das federelastische Element senkrecht oder schräg zur Längsachse des Befestigungsschenkels mit vom Ende des Befestigungsschenkels wegragenden, freien Ende aus dem Befestigungsschenkel über dessen Seitenfläche herausragt. Auf diese Weise wird ein leichtes Einschieben des Befestigungsschenkels unter einem geringfügigen, elastischen Ausweichen des freien Endes des federelastischen Elements erreicht und gleichzeitig die gewünschte widerhakenähnliche Funktion des federelastischen Elementes zuverlässig erfüllt.

Von Vorteil liegt der Schrägwinkel des federelastischen Elementes relativ zur Längsachse des Befestigungsschenkels auf der vom Ende des Befestigungsschenkels abgewandten Seite günstigerweise in der Größenordnung zwischen 70° und 20°, vorzugsweise bei etwa 60°.

Der Clip kann auch in die Aussparung der Seitenfläche des Befestigungsschenkels einrastbar oder einsteckbar sein, so daß die Aussparung eine Doppelfunktion erfüllt, nämlich einen Aufnahmeraum für den Clip sowie einen Freiraum für das federelastische Element zu bilden.

Zweckmäßigerweise besteht der Clip aus einem federelastischen Flachmaterialstück, z.B. aus Federstahl, so daß bei einfacher Herstellung eine einwandfreie Funktion dauerhafte gewährleistet ist.

Wenn der Schlitz, welcher für die Aufnahme des Halteabschnittes des Clips bestimmt ist, Teil der Aussparung ist und bsp. mit dem Hauptbereich der Aussparung lediglich durch eine geringe Vertiefung, welche von dem oberen Bereich des Bodens der Aussparung begrenzt ist, verbunden is, wobei die Höhe dieser Vertiefung gerade der Dicke des Flachmaterialstücks entspricht, aus welchem der Clip gefertigt ist, wird der Bereich des Clips, welcher auf dem oberen Abschnitt des Bodens der Aussparung zu liegen kommt, beim Einschieben des Befestigungsschenkels in seine Befestigungskammer zuverlässig trotz Einfederung des federelastischen Elementes gehalten, da die Außenseite des betreffenden Bereichs des Clips und der Innenfläche der Wandung der Befestigungskammer entlanggleitet.

Zur weiteren Verbesserung der Halterung des Clips kann sich der Schlitz von der Einschubseite für den einen Endabschnitt des Clips aus erweitern, so daß der für den mehr als 90°, vorzugsweise ca. 120° aus der Hauptebene des Clips abgewinkelte Endabschnitt mit gewissem Spiel von dieser Hinterschneidung gehalten wird.

Während in der Regel bei der Verwirklichung der Erfindung ein einziges federelastisches Element für jeden Befestigungsschenkel ausreicht, können an ein und demselben Befestigungsschenkel, bspw. auf einander gegenüberliegenden Seitenflächen und bspw. auch axial gegeneinander versetzt, zwei oder mehrere der federelastischen Elemene vorgesehen sein, um die Verbindungssicherheit zwischen den Bauprofilen noch weiter zu erhöhen.

Nachfolgend werden Ausführungsbeispiele der Erfindung anhand der Zeichnung näher erläutert.

Es zeigen:
- Fig. 1: eine Eckwinkelverbindung für kunststoffummantelte Aluminiumprofile eines Aluminiumfensters im Schnitt, wobei der eine Befestigungsschenkel des als Eckverbinder angesiedelten Verbindungsformstückes nur teilweise, der andere bis in seine Endposition, in die zugehörige Befestigungskammer eingeschoben ist,
- Fig. 2a und 2b: im Längsschnitt und in Draufsicht das Ende eines Befestigungsschenkels mit einem federelastischen Element gemäß einer Ausführungsform der Erfindung,
- Fig. 3a und 3b: im Längsschnitt und in Draufsicht weggebrochen einen Abschnitt eines Befestigungsschenkels mit einem federelastischen Element gemäß einer weiteren Ausführungsform der Erfindung,
- Fig. 4: ein weiteres Ausführungsbeispiel einer die Erfindung veranschaulichenden Eckwinkelverbindung,
- Fig. 5: in Schrägansicht den Endabschnitt eines auf Gehrung von 45° geschnittenen Bauprofils, bei welchem drei als Eckwinkel ausgebildete Verbindungsformstücke mit ihrem jeweils einen Schenkel bereits in die zugeordneten Kammern der beiden Oberflächenprofilstränge eingefügt sind,
- Fig. 6: die Anordnung gemäß Fig. 5 in Seitenansicht, teilweise geschnitten,
- Fig. 7a: in Seitenansicht den Endabschnitt des einen Bauprofils, nachdem das andere Bauprofil teilweise auf die freien Schenkel der als Eckwinkel ausgebildeten Verbindungsformstücke aufgeschoben worden ist,
- Fig. 7b: eine Darstellung gemäß Fig. 7a, nachdem das andere Bauprofil ebenfalls vollständig auf die entsprechenden Befestigungsschenkel der als Eckwinkel ausgebildeten Verbindungsformstücke aufgeschoben und die ersten Schenkel, nachdem sie vorher im Übermaß in ihre zugeordneten Kammern eingefügt worden waren, wieder etwas aus ihren Kammern herausgezogen worden sind, so daß die Gehrungsschnitte von 45° genau zur Deckung kommen,
- Fig. 8: eine Darstellung des Details X aus Fig. 6 und
- Fig. 9: eine Darstellung des Details Y aus Fig. 7b.

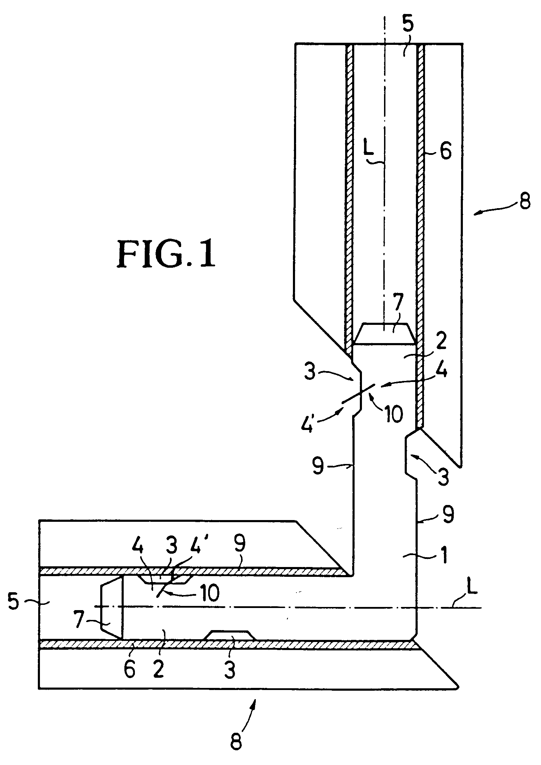

Das in Fig. 1 dargestellte rechtwinklige Verbindungsformstück 1 weist in Nähe der Enden seiner beiden Befestigungsschenkel 2 geringfügig axial zueinander versetzt und auf einander gegen überliegenden Seitenflächen 9 zwei flache Aussparungen 3 auf. Es können aber auch nur ein oder mehr als zwei Aussparungen 3 auf einer oder auf verschiedenen Seitenflächen 9 der Befestigungsschenkel 2 des Verbindungsformstückes 1 angeordnet sein. In mindestens einer der Aussparungen 3 jedes Befestigungsschenkels 2 ist jeweils mindestens ein als Federstahlplättchen ausgebildetes federelastisches Element 4 angeordnet. Die in diesem Falle flachen Federstahlplättchen 4 sind mit ihren inneren Enden in Schlitze 10 des Befestigungsschenkels 2 eingesetzt und festgelegt. Die Federstahlplättchen 4 stehen derart in einem spitzen Winkel zur Längsachse L des Befestigungsschenkels 2, daß das freie Ende 4' vom Ende des jeweiligen Befestigungsschenkels 2 abgewandt ist. Das jeweilige Federstahlplättchen 4 ragt mit seinem freien Ende 4' in einer bestimmten Länge aus den Aussparungen 3 über die Seitenfläche 9 hinaus. Die Stärke der Federstahlplättchen 4 ermöglicht beim Einführen des Befestigungsschenkels 2 in eine von einem Aluminiumprofilstrang 6 begrenzte Befestigungskammer 5 des Bauprofils 8 ein Umbiegen des freien Endes 4' des betroffenen Federstahlplättchens 4 nach innen, d.h. zur Längsachse L des Befestigungsschenkels 2, hin und ein federndes Gleiten desselben an der metallenen Innenfläche der Befestigungskammer 5 bis zur endgültigen Position des Befestigungsschenkels 2 in der Befestigungskammer 5 und zum Verhaken des freien Endes 4' an der Innenfläche der Wandung der Befestigungskammer 5 bei Ausübung eines Zuges auf den Befestigungsschenkel 2.

Die Enden der Befestigungsschenkel 2 sind mit einer umlaufenden Fase 7 versehen, die das Einführen des Befestigungsschenkels 2 in die Öffnung der Befestigungskammer 5 erleichtert.

An Stelle der Federstahlplättchen 4 können auch ein oder mehrere Federdrähte verwendet werden.

Entsprechend den unterschiedlichen Konstruktionen können die Verbindungsformstücke 1 in unterschiedlichen Winkelformen und auch gerade ausgebildet sein. Die Stärke und Außenkontur der Befestigungsschenkel 2 des Verbindungsformstückes 1 richtet sich dabei nach dem jeweiligen Querschnitt der Befestigungskammer 5 der zu verbindenden Profilstränge 6.

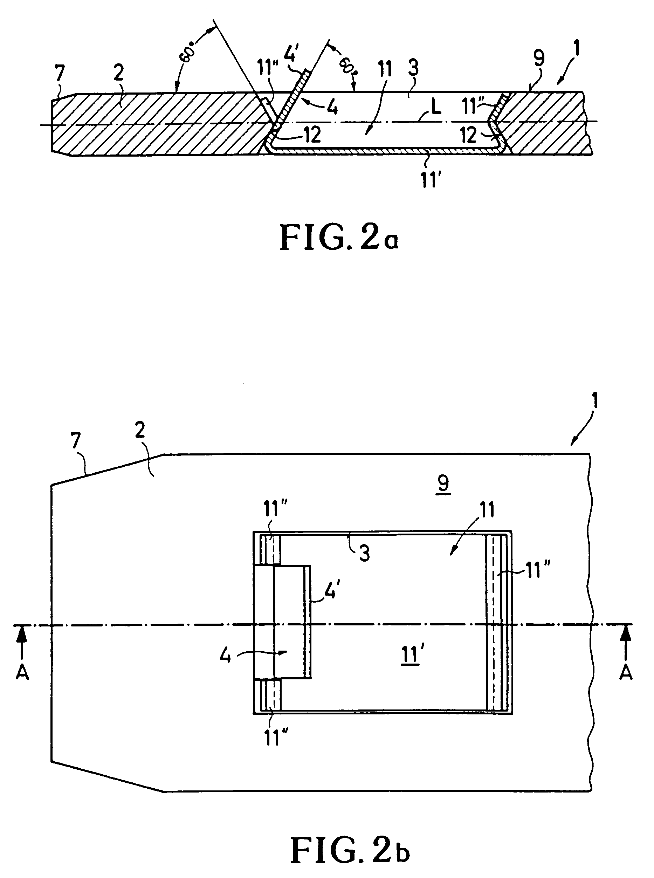

Fig. 2a und 2b veranschaulichen im Längsschnitt und in Draufsicht den Endabschnitt eines Befestigungsschenkels 2 eines Verbindungsformstücks 1 gemäß einer anderen Ausführungsform der Erfindung. In der Flachseite des Endabschnitts ist dabei eine Aussparung 3 vorgesehen, in welcher ein Clip 11 einrastbar ist. Zu diesem Zweck hat der Clip 11 einen sich im wesentlichen in Längsrichtung des Befestigungsschenkels 2 erstrecken den Mittelabschnitt 11' und an dessen Querseiten in gleicher Richtung abgewinkelte und in sich selbst gewinkelte Rastabschnitte 11'', welche mit entsprechend abgewinkelten Gegenrastflächen 12, welche die Aussparungen 3 stirnseitig begrenzen, form- und kraftschlüssig zusammenwirken, wenn der Clip 11 in die Aussparungen 3 eingeschnappt ist. Von der einen Querseite des Mittelabschnitts 11' ist auch das federelastische Element 4 abgewinkelt, indem es beidseitig von Teilrastabschnitten 11'' begrenzt ist und seine Federkraft senkrecht zur Ebene eines Profilelementrahmens ausübt, welcher mit Hilfe erfindungsgemäßer als Eckwinkel ausgebildeter Verbindungsformstücke 1 gebildet ist. Das federelastische Element 4, welches in diesem Falle also Teil eines aus Flachmaterial, z.B. Federstahl, gebildeten Clips 11 ist, ragt auch in diesem Falle vor dem Einsetzen des Befestigungsschenkels 2 in die Befestigungskammer 5 unter einer Schrägstellung von ca. 60° mit seinem freien Ende über die obere Seitenfläche 9 des Befestigungsschenkels 2 derart hi-naus, daß das freie Ende 4' von dem mit einer Fase 7 versehenen freien Ende des Befestigungsschenkels 2 abgewandt ist. Beim Einschieben des Befestigungsschenkels 2 in die Befestigungskammer 5 kann das freie Ende 4' des federelastischen Elements 4 in Richtung auf das Innere der Aussparung 3 elastisch ausweichen. Im eingesetzten Zustand des Befestigungsschenkels 2 taucht das freie Ende 4' praktisch vollständig in die Aussparung 3 ein und verhakt sich mit ihrer Vorderkante an der metallenen Innenwandfläche der Befestigungskammer 5, so daß der Befestigungsschenkel 2 einen festen Sitz in der Befestigungskammer 5 erhält und nicht mehr leicht aus dieser herausgezogen werden kann. Durch das Vorsehen der Aussparung 3 und das Einrasten des Clips 11 läßt sich die Erfindung besonders einfach verwirklichen.

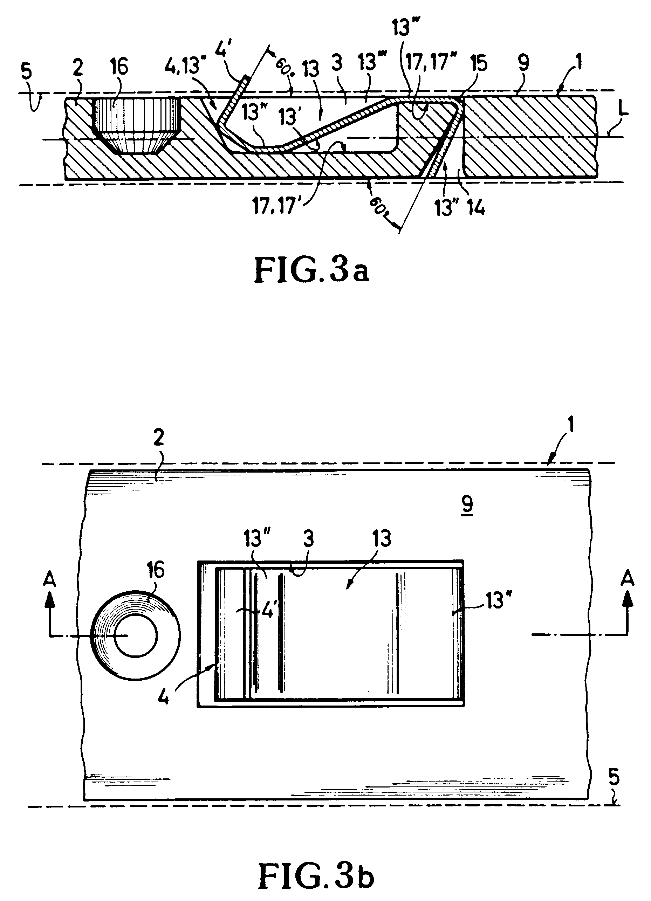

Fig. 3a und 3b zeigen eine weitere Ausführungsform. In einer Flachseite eines Abschnittes eines Befestigungsschenkels 2 eines erfindungsgemäßen Verbindungsformstückes ist auch hier eine Aussparung 3 vorgesehen, in welche ein Clip 13 einsetzbar ist. Die Aussparung 3 ist in ihrem Hauptabschnitt von einem unteren Abschnitt 17' des Bodens 17 und in einem oberen eine sich an den Hauptabschnitt anschließende flache Ausnehmung 15 bestimmenden Abschnitt 17'' des Bodens 17 begrenzt. Dabei greift einer der schenkeleinwärts abgewinkelten Endabschnitte 13'' des Clips 13 in einen von der oberen Seitenfläche 9 ausgehenden, sich von einer oberen Einsetzöffnung V-förmig erweiternden Schlitz 14 ein. Die Stärke des Bereichs 13^{IV} des Clips 13 entspricht der Tiefe der flachen Ausnehmung 15. Damit der eine Endabschnitt 13'' in dem Schlitz 14 gehalten wird, ist er um etwa 120° zur Längsachse L des Befestigungsschenkels 2 aus der Ebene des aus Flachmaterial gebildeten Clip 13 abgewinkelt, so daß er die von dem Schlitz 14 gebildete Hinterschneidung hintergreift. Die beiden zur Längsachse L des Befestigungsschenkels 2 parallelen Bereiche 13^{IV} des Clips 13 sind über einen schräg verlaufenden Zwischenabschnitt 13''' miteinander verbunden und stützen sich auf den Bodenabschnitt 17' und 17'' der Aussparung 3 ab. An den linken Bereich 13^{IV} des Clips 13 schließt sich der in umgekehrter Richtung wie der rechte Endabschnitt 13'' abgewinkelte linke Endabschnitt 13'' an, welcher bei der dargestellten Lage des Clips 13 das erfindungsgemäße federelastische Element 4 mit über die Seitenfläche 9 aus der Aussparung 3 herausragenden freien Ende 4' bildet. Der linke Endabschnitt 13'' ist abgewinkelt und liegt mit seinem Scheitel an einer schrägen, die Aussparung 3 nach außen hin erweiternden Stirnfläche der Aussparung 3 an. Dadurch wird die Funktionsfähigkeit im Hinblick auf das Verhalten des federelastischen Elements noch weiter verbessert. Der Clip 13 ist so in Seitenansicht etwa s-förmig ausgebildet. Das federelastische Element 4 hat auch hier in seinem äußeren Abschnitt eine Schrägstellung von etwa 60° zur Längsachse L, wobei es mit seinem freien Ende 4' vom freien Ende des Befestigungsschenkels 2 abgewandt ist. Beim Einschieben des Befestigungsschenkels 2 in die Befestigungskammer 5 kann somit auch hier das freie Ende 4' des federelastischen Elements 4 in Richtung auf das innere der Aussparung 3 elastisch ausweichen. Das freie Ende 4' taucht dabei vollständig in den Hauptabschnitt der Aussparung 3 ein und verhakt sich bei Einwirkung einer Zugkraft auf den Befestigungsschenkel (in der Zeichnung nach rechts) mit ihrer wie auch bei sämtlichen anderen Ausführungen verhältnismäßig scharfen Vorderkante an der Innenfläche der Wandung der Befestigungskammer 5. Dabei findet der eine (linke) ebene Bereich 13^{IV} des Clips 13 an dem Bodenabschnitt 17' der Aussparung 3 und der andere ebene Bereich 13^{IV} an dem Bodenabschnitt 17' der Aussparung 3 und der andere ebene Bereich 13^{IV} an dem Bodenabschnitt 17' der Ausnehmung 15' sein Gegenlager. Der rechte Bereich 13^{IV} wird dabei von der Innenfläche der Wandung der Befestigungskammer 5 festgelegt. Zur zusätzlichen Sicherung gegen Herausziehen durch eine Schraubenverbindung kann im Befestigungsschenkel 2 eine Sackbohrung 16 angeordnet sein.

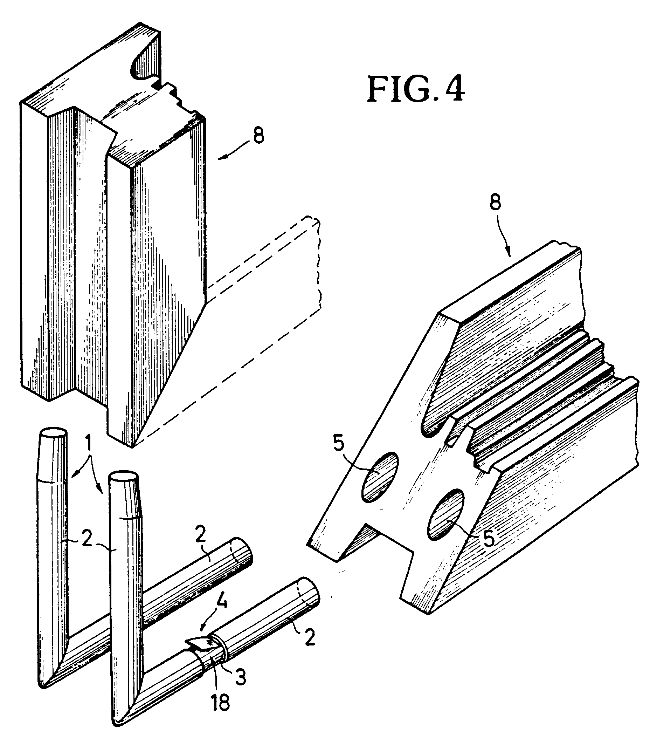

Bei dem in Fig. 4 veranschaulichten Ausführungsbeispiel wird die Eckwinkelverbindung zwischen zwei auf Gehrung geschnittenen profilstrangfreien Bauprofilen aus Kunststoff, z.b. Polyurethan, dadurch hergestellt, daß zwei als Eckwinkel ausgebildete Verwindungsformstücke 1 in zwei entsprechende Befestigungskammern 5 eingefügt werden. Die Verbindungsformstücke 1 sind aus rundem Strangmaterial, also bspw. aus Rundstahl gefertigt. an einem Befestigungsschenkel 2 ist veranschaulicht, daß das federelastische Element 4 als herausgebogenes Teil einer aus einem Flachmaterialstück, bspw. Flachstahl, gebildeten Manschette 18 nach außen herausgebogen ist. Die Manschette 18 ist als Spange in dem Bereich einer als flache Umfangsnut ausgebildeten Aussparung 3 auf den Befestigungsschenkel 2 axial unverrückbar aufgeklemmt, da die Breite der Manschette im wesentlichen der lichten Breite der Aussparung 3 entspricht. Die Tiefe der Aussparung 3 ist auch hier so getroffen, daß unter Berücksichtigung der Materialstärke der Manschette 18 und des federelastischen Elements 4 der Befestigungsschenkel 2 leicht in die Befestigungskammer 5 eingeschoben, aber nicht wieder herausgezogen werden kann, da sich das federelastische Element 4 bei entsprechender Zugkraft in dem Kunststoffmaterial mit seiner rückwärtigen Kante verhakt.

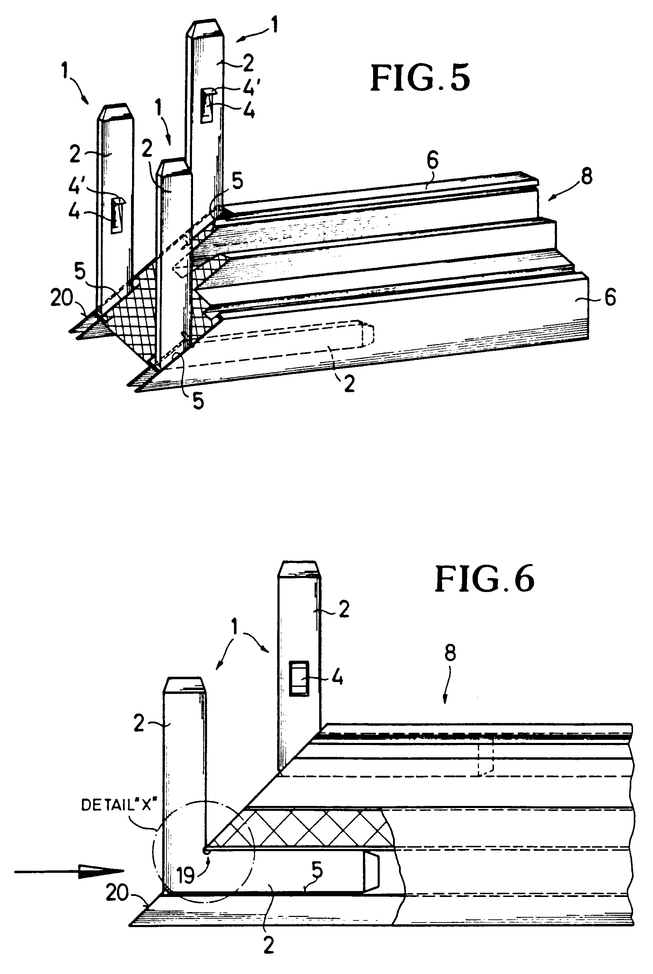

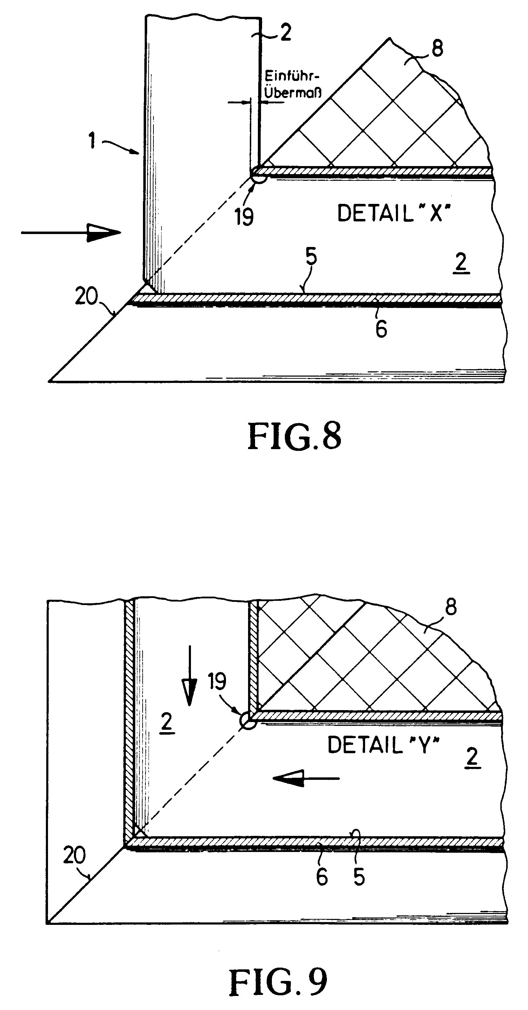

Anhand der Fig. 5 bis 9 wird ein weiteres Ausführungsbeispiel eines Verbindungsformstücks 1 näher erläutert, welches bei einer kraftschlüssigen Verbindung von auf 45° Gehrung geschnittenen Bauprofilen 8 bspw. eines Fenster- oder Türrahmens eingesetzt werden kann. Das in Fig. 8 dargestellte Bauprofil 8 hat an seinem Ende einen Gehrungsschnitt 20 von 45°. Das Bauprofil 8 besteht aus zwei Profilsträngen 6, welche über einen Kern aus Polyurethan miteinander verbunden sind. In den Profilsträngen 6 sind eine bzw. zwei Kammern 5 gebildet. Die als Eckwinkel ausgebildeten Verbindungsformstücke 1 haben auf der Innenseite jedes Schenkels jeweils ein federelastisches Element 4, welches vorzugsweise als Clip aus gehärtetem Federstahl besteht.

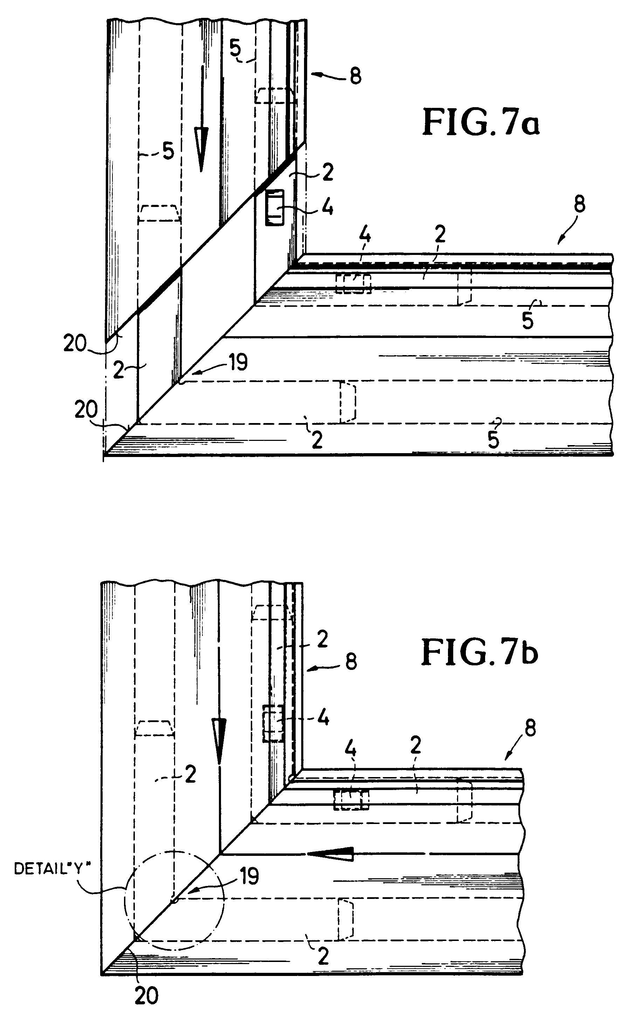

Wie aus Fig. 6 ersichtlich, sind die Eckwinkel mit ihrem jeweils einen Befestigungsschenkel 2 bereits in ihre zugeordneten Befestigungskammern 5 bis zum Anschlag eingeführt, d.h. die Eckwinkel sitzen formschlüssig, jedoch ohne Spannung fest in ihrer zugeordneten Befestigungskammer 5. Da der Eckwinkel am Übergang seiner Befestigungsschenkel 2 auf seiner Innenseite eine als Auskehlung ausgebildete Aussparung 19 aufweist, sind die jeweiligen Befestigungsschenkel 2 geringfügig im Übermaß in ihre zugeordneten Befestigungskammern 5 eingeführt, was insbesondere aus Fig. 8 deutlich ersichtlich ist. Werden nun, wie aus den Fig. 7a und 7b am deutlichsten zu erkennen, die jeweils anderen Befestigungsschenkel 2 der Eckwinkel in die ihnen zugeordneten Befestigungskammern 5 des anderen Bauprofils 8 eingeführt und anschließend vollständig eingepreßt, kommt es durch die Gehrungsschnitte 20 von 45° zu einem geringen Auszug des jeweils zuerst eingefügten Befestigungsschenkels 2 und damit zu einer Verspannung der beiden bspw. Rahmenteile bildenden Bauprofile 8 über das federelastische Element 4. Der Endzustand der Verpressung ist am deutlichsten aus Fig. 9 zu erkennen. Auf diese Weise entsteht ein kraftschlüssiger Verbund, da sich das freie Ende 4' des jeweiligen federelastischen Elements 4, welches bspw. aus gehärtetem Federstaht besteht, in die weichere Kammerwandung z.B. als Aluminium durch Formänderung einarbeiten kann.

### Bezugszeichenliste:

- 1: Verbindungsformstück
- 2: Befestigungsschenkel
- 3: Aussparung
- 4: federelastisches Element
- 4': freies Ende
- 5: Befestigungskammer
- 6: Profilstrang
- 7: Fase
- 8: Bauprofile
- 9: Seitenflächen
- 10: Schlitz
- 11: Clip
- 11': Mittelabschnitt
- 11'': Rastabschnitt
- 12: Gegenrastflächen
- 13: Clip
- 13': Mittelabschnitt
- 13'': Endabschnitte
- 13''': Zwischenabschnitt
- 13'''': Bereiche
- 14: Schlitz
- 15: Ausnehmung
- 16: Sackbohrung
- 17: Boden
- 17': unterer Bodenabschnitt
- 17'': oberer Bodenabschnitt
- 18: Manschette
- 19: Aussparung

## Patentansprüche

1. Federelastisches Element für ein Verbindungsformstück (1) für Bauprofile (8), insbesondere für Tür- oder Fensterprofile, welches mit wenigstens einem Befestigungsschenkel (2) in eine Befestigungskammer (5) des Bauprofils (8) einführbar und dort festlegbar ist, wobei das im Bereich des wenigstens einen Befestigungsschenkels (2) vorgesehene federelastische, als Clip (11, 13) ausgebildete Element (4) beim Einführen des Befestigungsschenkels (2) in die Befestigungskammer (5) wenigstens mit einem äußeren Abschnitt elastisch nach innen ausweicht und den Befestigungsschenkel (2) gegen Herausziehen aus der Befestigungskammer (5) sperrt, gekennzeichnet durch einen sich im wesentlichen in Längsrichtung des Befestigungsschenkels (2) anzuordnenden Mittelabschnitt (11') und an dessen Enden abgewinkelte profilierte Rastabschnitte (11'') zum kraft- und/oder formschlüssigen Zusammenwirken mit Gegenrastflächen (12) einer Aussparung (3) des Befestigungsschenkels (2).

2. Federelastisches Element nach dem Oberbegriff des Anspruchs 1, gekennzeichnet durch zwei von einem sich mit einer wesentlichen Komponente in Längsrichtung des Befestigungsschenkels (2) anzuordnenden Mittelabschnitt (13') in entgegengesetzten Richtungen abgewinkelte Endabschnitte (13''), von welchen wenigstens einer den federelastisch ausweichenden äußeren Abschnitt bildet und wenigstens der andere als Halteabschnitt in einen Schlitz (14) des Befestigungsschenkels (2) aufnehmbar ist.

3. Federelastisches Element nach Anspruch 2, dadurch gekennzeichnet, daß der Clip (13) symmetrisch ausgebildet ist und beide Endabschnitte (13'') jeweils einen elastisch ausweichenden Abschnitt bilden, von welchen, je nachdem in welcher Orientierung der Clip (13) in die Aussparung (3) einzusetzen ist, nur der eine als elastischer Abschnitt und der andere als Halteabschnitt fungiert.

4. Federelastisches Element nach Anspruch 2 oder 3, dadurch gekennzeichnet, daß der Mittelabschnitt (13') wenigstens teilweise zur Abstützung auf einem Boden (17) der Aussparung (3) ausgebildet ist.

5. Federelastisches Element nach Anspruch 4, dadurch gekennzeichnet, daß der Mittelabschnitt (13') in wenigstens zwei getrennten Bereichen (13'''') zur Abstützung auf unterschiedlich hoch liegenden Abschnitten des Bodens (17) der Aussparung (3) ausgebildet ist.

6. Federelastisches Element nach Anspruch 5, dadurch gekennzeichnet, daß die beiden zum Anliegen auf dem Boden (17) der Aussparung (3) bestimmten Bereiche (13'''') des Mitelabschnitts (13') von einem schräg zur Längsrichtung des Befestigungsschenkels (2) anordenbaren Zwischenabschnitt (13''') voneinander getrennt sind.

7. Federelastisches Element nach einem der vorhergehenden Ansprüche, dadurch gekennzeichnet, daß der abgewinkelte Endabschnitt (13'') in dem Schlitz (14) und der eine Bereich (13'''') des Mittelabschnitts (13') zwischen dem Boden (17) und der Innenfläche der Befestigungskammer (5) formschlüssig festlegbar ist.

8. Federelastisches Element nach einem der vorhergehenden Ansprüche, dadurch gekennzeichnet, daß es seine Federkraft senkrecht zur Ebene des aus den Bauprofilen (8) gebildeten Rahmens ausübt.

9. Federelastisches Element nach einem der vorhergehenden Ansprüche, dadurch gekennzeichnet, daß es im Bereich je einer auf einander gegenüberliegenden Seitenflächen (9) des Befestigungsschenkels (2) vorgesehenen Aussparung (3) anordenbar ist.

10. Federelastisches Element nach Anspruch 9, dadurch gekennzeichnet, daß es in Aussparungen (3), welche in der Nähe der Enden des Befestigungsschenkels (2) geringfügig axial zueinander versetzt angeordnet sind, anordenbar ist.

11. Federelastisches Element nach einem der vorhergehenden Ansprüche, dadurch gekennzeichnet, daß es senkrecht oder schräg zur Längsachse (L) des Befestigungsschenkels (2) mit von dem Ende des Befestigungsschenkels (2) wegragendem freien Ende (4') aus dem Befestigungsschenkel (2) über dessen Seitenfläche (9) herausragt.

12. Federelastisches Element nach Anspruch 11, dadurch gekennzeichnet, daß der Schrägwinkel des federelastischen Elements (4) relativ zur Längsachse (L) des Befestigungsschenkels (2) auf der von dem Ende des Befestigungsschenkels (2) abgewandten Seite in der Größenordnung zwischen 70° und 20°, vorzugsweise bei etwa 60° liegt.

13. Federelastisches Element nach einem der vorhergehenden Ansprüche, dadurch gekennzeichnet, daß der Clip (11) in die Aussparung (3) in der Seitenfläche (9) des Befestigungsschenkels (2) einrastbar oder einsteckbar ist.

14. Federelastisches Element nach einem der vorhergehenden Ansprüche, dadurch gekennzeichnet, daß der Clip (11) aus einem federelastischen Flachmaterialstück, z.B. aus Federstahl besteht.

15. Federelastisches Element nach einem der Ansprüche 2 bis 14, dadurch gekennzeichnet, daß der Schlitz (14) einen Teil der Aussparung (3) bildet.

16. Federelastisches Element nach einem der Ansprüche 2 bis 15, dadurch gekennzeichnet, daß sich der Schlitz (14) für den einen Endabschnitt (13'') von der Einschubseite aus erweitert.

## Claims

1. A resilient element for a shaped connecting piece (1) for structural profiles (8), more particularly for door or window frames, having at least one attachment leg (2) insertable and fixable in an attachment chamber (5) in a structural profile (8), the said resilient element (4) being formed like a clip (11,13), disposed near at least one attachment leg (2) and having at least one outer segment which yields elastically inwards on inserting the attachment leg (2) in the attachment chamber (5), thereby locking the attachment leg (2) in, and preventing its withdrawal from, the attachment chamber, characterized by having a middle section (11') disposed substantial midway along the attachment leg (2), and locking end sections (11') which are bent out and profiled to engage positively or under force against associated locking faces (12) of a recess (3) in the attachment leg (2).

2. A resilient element as in the introductory clause of Claim 1, characterized by having two end sections (13'') extending over a substantial distance from the middle section (13') in the longitudinal direction of the attachment leg (2) and then bending away in opposite directions, of which end sections at least the one forms the elastically yielding outer segment, whilst at least the other fits as a holding segment in a slot (14) in the attachment leg (2).

3. A resilient element as in Claim 2, characterized in that the clip (13) is symmetrical in shape, and both end sections (13'') can function as the elastically yielding segment, the orientation of the clip (13) in the recess (3) determining which one functions as a yielding segment, whilst the other functions as a holding segment.

4. A resilient element as in Claim 2 or 3, characterized in that the middle section (13'), or at least some part thereof, is so shaped that it rests on a floor (17) in the recess (3).

5. A resilient element as in Claim 4, characterized in that the middle section (13') is shaped into at least two separate parts (13'''') resting on parts of the floor (17) of the recess (3) disposed at different levels.

6. A resilient element as in Claim 5, characterized in that the parts (13'''') of the middle section (13') intended to rest on the floor (17) of the recess (3) are separated the one from the other by an intermediate part (13''') running at an angle to the longitudinal directon of the attachment leg (2).

7. A resilient element as in any of the preceding Claims, characterized in that the bent end segment (13'') in the slot (14) and that part (13'''') of the middle section (13') which lies between the floor (17) and the inner face of the attachment chamber (5) are positively clamped.

8. A resilient element as in any of the preceding Claims, characterized in that its resiliency is applied at right angles to plane of the frame constructed from the structural profiles (8).

9. A resilient element as in any of the preceding Claims, characterized in that it can be fitted along with other like elements, each one near a recess (3) on one of the opposite sidefaces (9) of the attachment leg (2).

10. A resilient element as in Claim 9, characterized in that it can be fitted in recesses (3) disposed at different short distances from the end of the attachment leg (2)

11. A resilient element as in any of the preceding Claims, characterized in that its free end (4') extending at right angles or obliquely to the longitudinal axis (L) of the attachment leg (2) protrudes beyond the sideface (9) of the attachment leg (2).

12. A resilient element as in Claim 11, characterized in that the oblique angle between the resilient (4) and the longitudinal axis (L) of the attachment leg (2), on the side facing away from the end of the attachment leg (2), is of the order of 20 - 70°, preferably about 60°.

13. A resilient element as in any of the preceding Claims, characterized in that the clip (11) can be snapped into or inserted in the recess (3) on the sideface (9) of the attachment leg (2).

14. A resilient element as in any of the preceding Claims, characterized in that the clip (11) is made from a resilient sheet material, such as spring steel for example.

15. A resilient element as in any of Claims 2 to 14, characterized in that the slot (14) forms part of the recess (3).

16. A resilient element as in any of Claims 2 to 15, characterized in that the slot (14) for one of the end segments (13'') broadens out from the insertion face.

## Revendications

1. Elément élastique pour une pièce d'assemblage (1) pour des profilés (8) destinés au bâtiment, en particulier des profilés de portes et de fenêtres, la pièce d'assemblage pouvant, par au moins une branche de fixation (2), être insérée dans une chambre de fixation (5) du profilé et y être immobilisée, et l'élément (4) élastique réalisé en forme de clip (11, 13) et prévu dans la zone d'au moins une branche de fixation (2) s'écartant, lors de l'insertion de la branche de fixation (2) dans la chambre de fixation (5), élastiquement vers l'intérieur par au moins une partie extérieure et bloquant la branche de fixation (2) dans la chambre de fixation (5) en l'empêchant d'en être retirée, **caractérisé** par une partie médiane (11') destinée à être disposée sensiblement dans la direction longitudinale de la branche de fixation (2) et présentant à ses extrémités des parties d'encliquetage (11'') coudées, profilées, destinées à coopérer par serrage et/ou par complémentarité de forme avec des surfaces conjuguées d'encliquetage (12) d'une échancrure (3) de la branche de fixation (2).

2. Elément élastique suivant le préambule de la revendication 1, **caractérisé** par deux parties d'extrémité (13'') qui sont coudées en sens opposé par rapport à une partie médiane (13') destinées à être disposées avec une composante essentielle dans la direction longitudinale de la branche de fixation (2), au moins d'une desdites parties d'extrémité formant ladite partie extérieure s'écartant élastiquement et au moins l'autre étant susceptible d'être reçue, en tant que partie de maintien, dans une fente (14) de la branche de fixation (2).

3. Elément élastique suivant la revendication 2, **caractérisé** par le fait que le clip (13) est réalisé symétriquement et que les deux parties d'extrémité (13'') forment chacune une partie s'écartant élastiquement, parmi lesquelles, selon l'orientation dans laquelle le clip (13) doit être monté dans l'échancrure (3) l'une seulement fait office de partie élastique et l'autre de partie de maintien.

4. Elément élastique suivant la revendication 2 ou 3, **caractérisé** par le fait que la partie médiane (13') est réalisée au moins en partie pour prendre appui sur un fond (13) de l'échancrure (3).

5. Elément élastique suivant la revendication 4, **caractérisé** par le fait que la partie médiane (13') est réalisée dans au moins deux zones (13^{iv}) séparées pour prendre appui sur des parties du fond (17) de l'échancrure (3), se trouvant à des hauteurs différentes.

6. Elément élastique suivant la revendication 5, **caractérisé** par le fait que les deux zones (13^{iv}) de la partie médiane (13'), destinées à prendre appui sur le fond (17) de l'échancrure (3), sont séparées l'une de l'autre par une partie intermédiaire (13''') pouvant être disposée de façon oblique par rapport à la direction longitudinale de la branche de fixation (2).

7. Elément élastique suivant l'une des revendications précédentes, **caractérisé** par le fait que la partie d'extrémité (13'') coudée et l'une desdites zones (13^{iv}) de la partie médiane (13') peuvent être immobilisées par complémentarité de forme, l'une dans la fente (14) et l'autre entre le fond (17) de l'échancrure (3) et la surface intérieure de la chambre de fixation (5).

8. Elément élastique suivant l'une des revendications précédentes, **caractérisé** par le fait qu'il exerce sa force élastique perpendiculairement au plan du cadre défini par les profilés (8).

9. Elément élastique suivant l'une des revendications précédentes, **caractérisé** par le fait qu'il peut être disposé respectivement dans la zone des échancrures (3) prévue sur les faces latérales opposées (9) de la branche de fixation (2).

10. Elément élastique suivant la revendication 9, caractérisé par le fait qu'il peut être disposé dans des échancrures (3) disposées au voisinage des extrémités de la branche de fixation (2) en étant légèrement décalées axialement l'une par rapport à l'autre.

11. Elément élastique suivant l'une des revendications précédentes, **caractérisé** par le fait qu'il dépasse de la branche de fixation (2), sur la surface latérale (9) de cette dernière, perpendiculairement ou de façon oblique par rapport à l'axe longitudinal (L) de la branche de fixation (2), son extrémité libre (4') s'éloignant de l'extrémité de la branche de fixation (2).

12. Elément élastique suivant la revendication 11, **caractérisé** par le fait que l'angle d'inclinaison de l'élément élastique (4) par rapport à l'axe longitudinal (L) de la branche de fixation (2), sur le côté éloigné de l'extrémité de la branche de fixation (2) est d'un ordre de grandeur compris entre 70° et 20°, de préférence d'environ 60°.

13. Elément élastique suivant l'une des revendications précédentes, **caractérisé** par le fait que le clip (11) peut être encliqueté ou emboîté dans l'échancrure (3) de la surface latérale (9) de la branche de fixation (2).

14. Elément élastique suivant l'une des revendications précédentes, **caractérisé** par le fait que le clip (11) est constitué par un morceau de matériau plat élastique, par exemple en acier à ressort.

15. Elément élastique suivant l'une des revendications 2 à 14, **caractérisé** par le fait que la fente (14) forme une partie de l'échancrure (3).

16. Elément élastique suivant l'une des revendications 2 à 15, **caractérisé** par le fait que la fente (14) pour ladite partie d'extrémité (13'') s'élargit depuis le côté d'insertion.
